# EUROPÄISCHE PATENTSCHRIFT

(11) **EP 1 549 027 B1**
(45) Veröffentlichungstag und Bekanntmachung des Hinweises auf die Patenterteilung: **14.12.2005**
(21) Anmeldenummer: 03029689.1
(22) Anmeldetag: 23.12.2003
(51) Int. Cl.: H04M 1/00

(54) **Verfahren zum Betreiben eines tragbaren elektronischen Geräts sowie tragbares elektronisches Gerät**
Method for operating a mobile electronic device and the mobile electronic device.
Méthode pour utiliser un dispositif électronique mobile

(43) Veröffentlichungstag der Anmeldung: 29.06.2005
(73) Patentinhaber: DictaNet Software AG, 10789 Berlin (DE)
(72) Erfinder: Camacho, Paul, 13503 Berlin (DE); Becker, Peter, Dr., 10437 Berlin (DE)
(74) Vertreter: Bittner, Thomas L.

(56) Entgegenhaltungen:
- DE-A- 10 114 997
- DE-A- 10 143 450
- DE-A- 19 638 113
- US-A- 4 875 229

## Beschreibung

Die Erfindung betrifft ein Verfahren zum Betreiben eines tragbaren elektronischen Geräts, insbesondere eines Mobilfunktelefons, sowie ein tragbares elektronisches Gerät.

Auf dem Gebiet tragbarer elektronischer Geräte, die in der Lage sind, Informationen in Form elektronischer Daten zu empfangen, zu senden, zu verarbeiten und/oder zu speichern, findet eine zunehmende Integration unterschiedlicher Funktionalitäten statt, die für eine Benutzer früher nur mit jeweils einem separaten Gerät ausführbar waren. Zu den separat nutzbaren elektronischen Geräten gehören beispielsweise Mobilfunktelefone, mit denen eine Sprachkommunikation ausführbar ist, elektronische Taschenkalender (PDA - "Personal Digital Assistant") und auch Laptop-Computer. Diese unterschiedlichen tragbaren elektronischen Geräte stellten ursprünglich jeweils verschiedene von dem Benutzer verwendbare Anwenderfunktionen zur Verfügung. Von Benutzern werden jedoch zunehmend elektronische Geräte gewünscht, bei denen die verschiedenen Anwenderfunktionen möglichst mit Hilfe eines elektronischen Geräts ausgeführt werden können.

Dieses hat beispielsweise dazu geführt, daß die mit einem Hand-Diktiergerät ausführbaren Funktionen im Zusammenhang mit einer Spracheingabeaufzeichnung, beispielsweise das Aufnehmen und das Abspielen von Diktaten, mit Hilfe eines Anwendungsprogrammes auch auf Laptop-Computern, Mobilfunktelefonen oder elektronischen Taschenkalendern verfügbar gemacht wurden. Üblicherweise verfügen die elektronischen Geräte über die Systemvoraussetzungen zum Implementieren dieser Diktieranwendung, nämlich eine Mikrofoneinrichtung zum Aufnehmen von Spracheingaben, eine Lautsprechereinrichtung zum Wiedergeben aufgezeichneter Sprachdaten sowie Prozessortechnik mit einer Speichereinrichtung zum Speichern und Bearbeiten der Sprachdaten.

Die Nutzung der Systemkomponenten im Rahmen der Diktieranwendung wird mit Hilfe eines für das jeweilige elektronische Gerät angepaßten Anwendungsprogramms realisiert, welches auf dem elektronischen Gerät implementiert wird. Bei dem bekannten elektronischen Geräten ist es in der Regel dann auch möglich, die elektronisch gespeicherten Sprachdaten über eine drahtlose oder drahtgebundene Telekommunikationsverbindung zu einem anderen elektronischen Gerät zu übertragen. Darüber hinaus besteht häufig die Möglichkeit, ein Wechselspeichermedium, beispielsweise eine Speicherkarte in einem für das jeweilige elektronische Gerät geeigneten Format, aus dem elektronischen Gerät mit der implementierten Diktieranwendung zu entnehmen und in ein anderes elektronisches Gerät einzustecken, um die aufgezeichneten Sprachdaten zu verarbeiten, beispielsweise für das Schreiben eines Textes gemäß dem Diktat.

In dem Dokument DE 196 38 113 A1 sind ein Verfahren und eine Einrichtung zum Speichern und Lesen von Daten in einem Telefongerät beschrieben. Bei dem Telefongerät handelt es sich beispielsweise um ein schnurloses Telefon, was mit einem Mobilfunknetz in Verbindung steht. Mittels Betätigen eines Tastschalters kann eine Sprachdatenaufzeichnungsanwendung mit Hilfe des Telefons ausgeführt werden. Je nachdem wie oft und wie lange der Tastschalter gedrückt wird, werden Sprachdaten aufgezeichnet, abgehört oder gelöscht. Das bekannte Telefon verfügt über eine Anzeigeeinheit und Softkeys. Die Anzeigeeinheit wird genutzt, um unterschiedliche Menüfunktionen anzuzeigen, die mittels Betätigung der Softkeys ausgewählt werden können. Derartige Menüfunktionen sind beispielsweise Start-/Stopbetrieb bei der Wiedergabe oder Löschen. Unterschiedliche Menüs werden je nach Art der Betätigung des Tastschalters durch den Benutzer des Telefons angezeigt.

Obwohl es für den Benutzer derartiger elektronischer Geräte von Vorteil ist, daß auch eine Diktieranwendung zur Verfügung gestellt wird, besteht das Problem, daß die elektronischen Geräte nicht für die Ausführung der Diktieranwendung konstruiert sind, wie das bei einem Hand-Diktiergerät der Fall ist, beispielsweise indem ergonomisch optimierte Bedienungstasten gebildet sind. Dieser Nachteil hat dazu geführt, daß die auf den tragbaren elektronischen Geräten, wie Mobilfunktelefon oder elektronischer Taschenkalender, verfügbare Diktieranwendungen kaum genutzt wird.

Aufgabe der Erfindung ist es, ein verbessertes Verfahren zum Betreiben eines tragbaren elektronischen Geräts sowie ein verbessertes tragbares elektronisches Gerät anzugeben, die dem Benutzer eine vereinfachte Handhabung des tragbaren elektronischen Geräts in Verbindung mit einer Diktieranwendung ermöglichen.

Erfindungsgemäß ist ein Verfahren zum Betreiben eines tragbaren elektronischen Geräts, insbesondere eines Mobilfunktelefons, geschaffen, auf dem eine Diktieranwendung zum Aufnehmen, Speichern, Wiedergeben und/oder Bearbeiten einer Spracheingabe mit Hilfe eines Anwendungsprogramms ausgeführt wird. Hierbei sind in einer von dem tragbaren elektronischen Gerät umfaßten Speichereinrichtung Speicherdaten für mehrere Betriebszustände der Diktieranwendung gespeichert. Die mehreren Betriebszustände sind jeweils durch charakteristische Diktatparameter einer Spracheingabeaufzeichnung definiert. Die Speicherdaten umfassen Informationen über ein im Fall des jeweiligen Betriebszustandes der Diktieranwendung auf einer Anzeigeeinrichtung des tragbaren elektronischen Geräts anzuzeigendes, für den jeweiligen Betriebszustand definiertes Menü von Funktionen der Diktieranwendung, die von einem Benutzer mit Hilfe einer Eingabeeinrichtung des tragbaren elektronischen Geräts ausgewählt werden können. Bei dem Verfahren sind weiterhin die folgenden Schritte vorgesehen: Ermitteln eines momentanen Betriebszustandes der Diktieranwendung, welcher durch momentane charakteristische Diktatparameter einer momentanen Spracheingabenaufzeichnung definiert ist, mit Hilfe einer von dem tragbaren elektronischen Gerät umfaßten Steuereinrichtung, Vergleichen des ermittelten momentanen Betriebszustands für die momentane Spracheingabenaufzeichnung mit den Speicherdaten für die mehreren Betriebszustände der Diktieranwendung, Auswählen eines dem ermittelten momentanen Betriebszustand entsprechenden Menüs von Funktionen der Diktieranwendung anhand des Vergleichs durch die Steuereinrichtung und Veranlassen einer Anzeige des ausgewählten Menüs von Funktionen der Diktierfunktionen auf der Anzeigeeinrichtung durch die Steuereinrichtung.

Es ist vorgesehen, daß beim Ermitteln des momentanen Betriebszustandes der Diktieranwendung als momentane charakteristische Diktatparameter eine momentane Gesamtlänge (mL) zwischen einem Anfang und einem Ende der momentanen Spracheingabeaufzeichnung und eine momentane Arbeitsposition (mP) zwischen dem Anfang und dem Ende der momentanen Spracheingabeaufzeichnung ermittelt werden. Auf diese Weise ist eine effiziente Bestimmung des momentanen Betriebszustands der Diktieranwendung möglich. Darüber hinaus wird mit Hilfe dieser Parameterwahl eine Reduzierung der möglichen Betriebszustände auf vier mögliche Betriebszustände erreicht.

Der wesentliche Vorteil, welcher mit Hilfe dieses Verfahrens gegenüber dem Stand der Technik geschaffen ist, besteht darin, daß dem Benutzer in Abhängigkeit von dem Betriebszustand während der Ausführung der Diktieranwendung ein für den jeweiligen Betriebszustand angepaßtes Menü von Funktionen der Diktieranwendung angezeigt werden kann, welches dann beispielsweise dahingehend optimiert ist, daß lediglich ein Teil der in der Diktieranwendung verfügbaren Funktionen für die Auswahl durch den Benutzer bereitgestellt wird. Je nach Betriebszustand der Diktieranwendung, beispielsweise ein Betriebszustand am Anfang eines Diktats oder ein Betriebszustand am Ende eines Diktats, wird dem Benutzer ein individuell hierauf abgestimmtes Menü automatisch bereitgestellt. So ist es beispielsweise nicht notwendig, in jedem Betriebszustand der Diktieranwendung alle möglichen Funktionen der Diktieranwendung, beispielsweise die Funktionen "Aufnehmen", "Wiedergeben", "Einfügen", "Vorwärtsspulen" oder dergleichen, dem Benutzer zur Auswahl zur Verfügung zu stellen, da in Verbindung mit einem bestimmten Betriebszustand in der Regel nur ein Teil der Gesamtmenge von Funktionen der Diktieranwendung ausführbar ist. Wenn bei der Ermittlung des Betriebszustands beispielsweise festgestellt wird, daß die Aufzeichnung der Spracheingabe noch nicht begonnen hat, d. h. es handelt sich um einen Betriebszustand am Anfang der Diktataufzeichnung, ist die Bereitstellung einer Funktion "Rückwärtsspulen" zwecklos.

Die Verfahrensgestaltung beim Betreiben des tragbaren elektronischen Geräts in der beschriebenen Art und Weise erleichtert dem Benutzer die Handhabung des tragbaren elektronischen Geräts im Zusammenhang mit der Diktieranwendung, da ihm in Abhängigkeit vom Betriebszustand stets ein optimiertes Menü über die Anzeigeeinrichtung zur Verfügung gestellt wird, daß bestimmte Funktionen der Diktieranwendung umfaßt. Das optimierte Menü ist auch mit Hilfe der bei tragbaren elektronischen Geräten üblicherweise miniaturisierten Eingabeeinrichtung effizient handhabbar.

Eine bevorzugte Ausführungsform der Erfindung kann vorsehen, daß als weiterer charakteristischer Diktatparameter der Spracheingabeaufzeichnung ein dynamischer Arbeitszustand verwendet wird, welcher einen Wiedergabe-, einen Aufnahme- und/oder einen Spulstatus der Spracheingabeaufzeichnung anzeigt. Hierdurch ist eine Möglichkeit geschaffen, eine größere Vielfalt von Betriebszuständen zu berücksichtigen, sofern dieses gewünscht ist.

Das Verfahren kann vorteilhaft in Verbindung mit beliebigen tragbaren elektronischen Geräten verwendet werden. Die Vorteile des Verfahrens entfalten ihre Wirkung insbesondere in Verbindung mit tragbaren elektronischen Telekommunikationsgeräten, beispielsweise Mobilfunktelefonen, die in der Lage sind, elektronische Daten über drahtlose Telekommunikationsverbindungen auszutauschen. Mobilfunktelefone verfügen über ein naturgemäß in der Größe beschränktes Eingabefeld mit Tasten und/oder Joystick-Elementen. Die bei dem Verfahren vorgesehene optimierte Menübereitstellung berücksichtigt die Gegebenheiten dieser Geräte, indem insbesondere nur für den jeweiligen Betriebszustand sinnvolle/notwendige Funktionen der Diktieranwendung bereitgestellt werden.

Die Erfindung wird im folgenden anhand von Ausführungsbeispielen unter Bezugnahme auf eine Zeichnung näher erläutert. Hierbei zeigen:
- Figur 1: eine schematische Darstellung eines tragbaren elektronischen Geräts; und
- Figur 2: ein Ablaufdiagramm für ein Verfahren zum Betreiben des tragbaren elektronischen Geräts nach Figur 1 in Verbindung mit einer Diktieranwendung, bei dem lediglich vier Betriebszustände berücksichtigt werden.

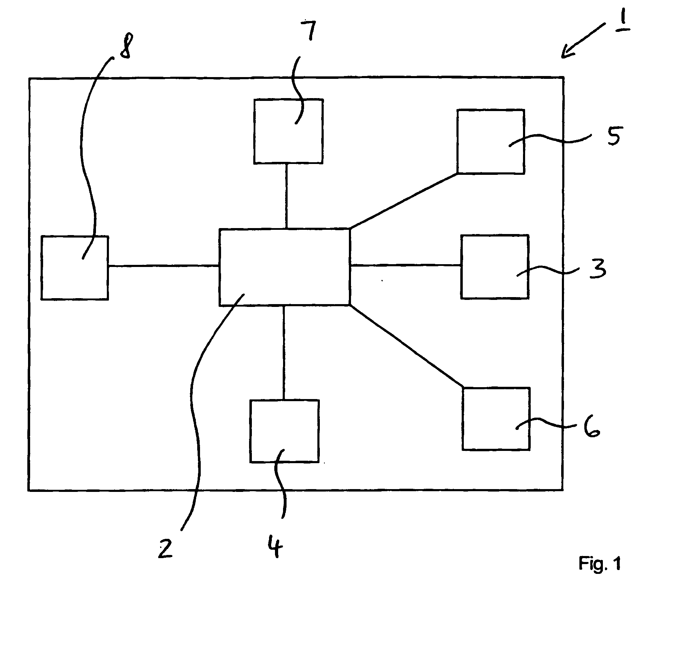

Figur 1 zeigt eine schematische Darstellung eines tragbaren elektronischen Geräts 1, bei dem es sich beispielsweise um ein Mobilfunktelefon, einen elektronischen Taschenkalender oder einen Laptop-Computer handelt. Eine Steuereinrichtung 2, die beispielsweise als ein geeigneter Mikroprozessor für die verschiedenen Arten elektronischer Geräte ausgeführt ist, steuert mit Hilfe geeigneter Befehle Systemkomponenten des tragbaren elektronischen Geräts 1 sowie den elektronischen Datenaustausch zwischen den Systemkomponenten. Die schematische Darstellung der Kopplung von Systemkomponenten nach Figur 1 und die folgende Beschreibung ihres Zusammenwirkens ist beispielhaft und kann sich für verschiedene elektronische Geräte unterscheiden, was für die Verwirklichung der Erfindung jedoch nicht von Bedeutung ist. Der Fachmann kann die Erfindung ohne weiteres an eine jeweils vorhandene Systemkonfiguration des jeweiligen elektronischen Geräts anpassen.

Gemäß Figur 1 verfügt das tragbare elektronische Gerät 1 über ein Mikrofon 3 zum Aufnehmen von Spracheingaben, einen Lautsprecher 4 zum Ausgeben von Audiodaten, eine Anzeige 5 zum Anzeigen von grafischen Informationen, insbesondere von Benutzerinformationen, beispielsweise Menüs mit Funktionen, die der Benutzer mit Hilfe einer Eingabeeinrichtung 6 zur Ausführung auswählen kann, sowie einen Speicher 7 zum Speichern von elektronischen Daten. Nach der Darstellung in Figur 1 verfügt das tragbare elektronische Gerät 1 weiterhin über eine Sende-/Empfangseinheit 8 zum Senden und Empfangen von elektronischen Daten über eine drahtlose oder eine drahtgebundene Datenverbindung zu anderen Geräten.

Mit Hilfe eines an die Systemkonfiguration des tragbaren elektronischen Geräts 1 angepaßten Anwendungsprogramms ist auf dem tragbaren elektronischen Gerät 1 eine Diktieranwendung implementiert. Derartige Diktieranwendungen sind für verschiedene tragbare elektronische Geräte, wie Mobilfimktelefon oder elektronischer Taschenkalender, als solche bekannt. Mit Hilfe der Diktieranwendung kann ein Benutzer des tragbaren elektronischen Geräts 1 über das Mikrofon 3 eine Spracheingabe machen, die in elektronische Daten, insbesondere digitale Daten, umgewandelt wird. Die elektronischen Daten werden dann mit Hilfe der Steuereinrichtung 2 im Speicher 7 gespeichert.

Die Diktieranwendung umfaßt verschiedene Funktionen, die vom Benutzer des tragbaren elektronischen Geräts 1 zur Ausführung mit Hilfe der Eingabeeinrichtung 6 ausgewählt werden können. Bei den Funktionen der Diktieranwendung kann zwischen Funktionen, die den Vorgang der Diktataufzeichnung betreffen, und Funktionen unterschieden werden, die den Umgang mit Datensätzen von aufgezeichneten Diktaten betreffen. Die Funktionen der Diktieranwendung, welche den Prozeß der Diktataufzeichnung betreffen, umfassen insbesondere die folgenden Funktionen: "Aufnehmen" (REC), "Wiedergeben" (PLAY), "Vorwärtsspulen" (FF), "Rückwärtsspulen" (REW), "Anhalten" (STOP) sowie "Einfügen" (INS). Darüber hinaus ist eine Funktion CUE vorgesehen, deren Auswahl durch den Benutzer der Diktieranwendung bei der Ausführung dazu führt, daß die Diktataufzeichnung vom aktuellen Stand ein Stück zurück gespult wird, beispielsweise um Sekunden, die zurück gespulte Diktatabschnitt dann wiedergegeben und anschließend die Aufnahme fortgesetzt wird. Dieses vom Benutzer im Rahmen der Diktataufzeichnung nutzbaren Funktionen der Diktieranwendung sind als solche bekannt. Die Funktionen der Diktieranwendung, welche den Umgang mit Datensätzen mit einer Diktataufzeichnung betreffen, umfassen beispielsweise das Erzeugen, das Versenden/Empfangen, das Kopieren und/oder das Löschen solcher Datensätze. Auch diese Funktionen einer Diktieranwendung sind als solche bekannt und können vom Fachmann auf dem jeweiligen tragbaren elektronischen Gerät mit Hilfe eines geeigneten Anwendungsprogramms implementiert werden.

In den Tabellen 1 und 2 sind Übersichten über Betriebszustände der Diktieranwendung auf dem tragbaren elektronischen Gerät 1 dargestellt. Die verschiedenen Betriebszustände werden anhand der folgenden charakteristischen Parameter unterschieden: Gesamtlänge (L) zwischen einem Anfang und einem Ende einer Diktataufzeichnung, Arbeitsposition (P) zwischen dem Anfang und dem Ende der Diktataufzeichnung und dynamischer Arbeitszustand (Z), welcher einen Wiedergabe-, einen Aufnahme- und/oder einen Spulstatus der Diktataufzeichnung anzeigt. Jedem der in den Tabellen 1 und 2 dargestellten Betriebszustand ist ein Menü mit einer oder mehreren Funktionen der Diktieranwendung zugeordnet. Bei der Ausführungsform nach Tabelle 1 ist insgesamt eine Anzahl von vier Betriebszuständen vorgesehen, wohingegen bei der Ausführungsform nach Tabelle 2 eine Gesamtanzahl von sechs Betriebszuständen dargestellt ist.

**Tabelle 1**

| **Betriebszustand** | **Menü** |
|---|---|
| L=0 | REC |
| P=0 | STOP |
| L>0 | INS |
| P=0 | REC |
| | STOP |
| | PLAY |
| | FF |
| L>0 | REC |
| P≈L | STOP |
| | CUE |
| | REW |
| L>0 | INS |
| 0<P<L | REC |
| | STOP |
| | PLAY |
| | REW |
| | FF |

**Tabelle 2**

| **Betriebszustand** | **Menü** |
|---|---|
| P≠0 | REC |
| L≠0 | |
| L>0 | INS |
| P=0 | REC |
| | PLAY |
| | FF |
| L > 0 | REC |
| P≈L | CUE |
| | REW |
| L>0 | INS |
| 0< P < L | REC |
| | PLAY |
| | REW |
| | FF |
| L > 0 | STOP |
| 0<P<L | REW |
| Z ? | FF |
| L>0 | STOP |
| 0<P<L | PLAY |
| Z? | |

Beim Betreiben des tragbaren elektronischen Geräts nach Figur 1 im Rahmen der Diktieranwendung wird das folgende Verfahren ausgeführt. Im Speicher 7 des tragbaren elektronischen Geräts 1 sind Speicherdaten gespeichert, die Informationen über die mehreren Betriebszustände der Diktieranwendung umfassen. Gemäß den Ausführungsformen nach Tabelle 1 und 2 sind die mehreren Betriebszustände jeweils durch charakteristische Diktatparameter der Diktataufzeichnung definiert. Bei der Ausführungsform nach Tabelle 1 handelt es sich um die charakteristischen Diktatparameter P und L, wohingegen bei der Ausführungsform nach Tabelle 2 zusätzlich der Diktatparameter Z verwendet wird. Die Speicherdaten umfassen darüber hinaus Informationen über das im Fall des jeweiligen Betriebszustandes der Diktieranwendung verwendete Menü an Funktionen der Diktieranwendung. Das jeweilige Menü ergibt sich aus den Tabellen 1 und 2 für die beiden verschiedenen Ausführungsformen. Auf diese Weise sind in dem Speicher 7 Informationen über das für den jeweiligen Betriebszustand definiert vorgegebene Menü an Funktionen der Diktieranwendung gespeichert.

Im Rahmen der Diktieranwendung wird nun ein momentaner Betriebszustand der Diktieranwendung mit Hilfe der Steuereinrichtung 2 ermittelt. Zu diesem Zweck werden bei der Ausführungsform nach Tabelle 1 eine momentane Gesamtlänge (mL) der Diktataufzeichnung sowie eine momentane Arbeitsposition (mP) innerhalb der Gesamtlänge der Diktataufzeichnung ermittelt. Je nachdem, ob die momentane Arbeitsposition (mP) am Anfang oder am Ende der Diktataufzeichnung oder irgendwo dazwischen liegt, wird mit Hilfe eines Vergleichs der ermittelten momentanen Werte mit den Speicherdaten in dem Speicher 7 ein hierzu gehöriges Menü an Funktionen der Diktieranwendung ausgewählt und auf der Anzeige 5 angezeigt, so daß der Benutzer des tragbaren elektronischen Geräts 1 mit Hilfe der Eingabeeinrichtung 6 eine Funktion aus diesem Menü auswählen kann, um die Diktieranwendung fortzusetzen, was beispielsweise eine weitere Aufnahme (REC) oder das Vorwärtsspulen (FF) der Diktataufzeichnung betreffen kann.

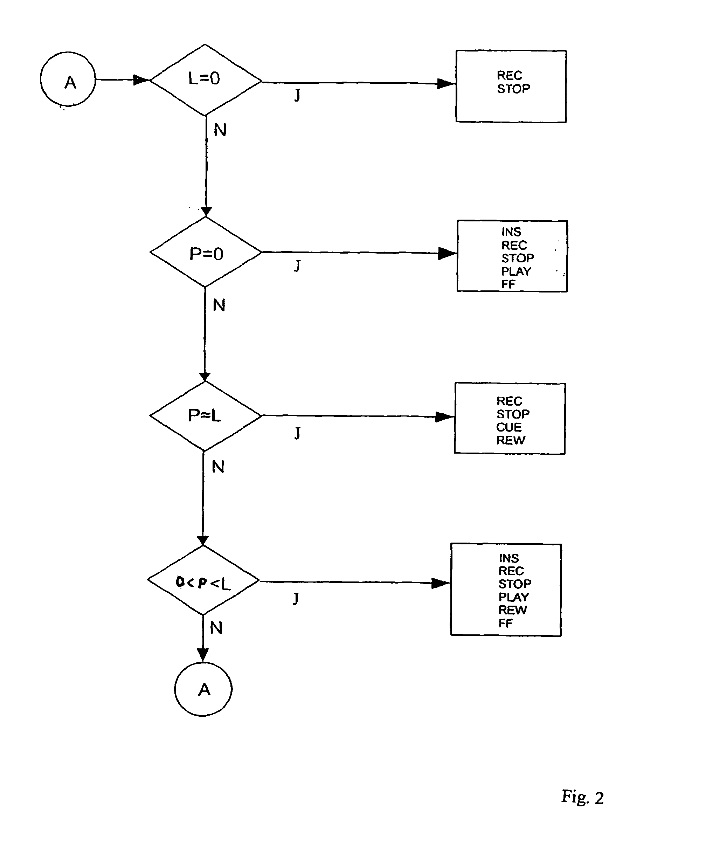

Das beschriebene Verfahren für die Ausführungsform nach Tabelle 1 ist in Figur 2 anhand eines Ablaufdiagramms schematisch dargestellt.

Wie sich aus den Tabellen 1 und 2 ergibt, umfassen die Menüs in den verschiedenen Betriebszuständen jeweils nur eine begrenzte Anzahl von Funktionen der Diktieranwendung, die von dem Benutzer in dem jeweiligen Betriebszustand sinnvoller Weise ausgeführt werden können. Im Unterschied zu bekannten Diktieranwendung ist also nicht vorgesehen, dem Benutzer zu jedem Zeitpunkt der Ausführung der Diktieranwendung möglichst viele Bedienfunktionen zur Verfügung zu stellen, auch wenn die Wahrscheinlichkeit für die Auswahl einer bestimmten Funktion durch den Benutzer und hierdurch die Wahrscheinlichkeit für deren Ausführung verschwindend gering ist. Vielmehr werden ein tragbares elektronisches Geräts sowie ein Verfahren zum Betreiben des tragbaren elektronischen Geräts vorgeschlagen, welche ergonomisch optimiert sind. Mit Hilfe der Erfindung wird der Fachmann in die Lage versetzt, diese unter Ausnutzung von Diktieranwendungen, die als solche bekannt sind, für verschiedene tragbare elektronische Geräte umzusetzen.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Betreiben eines tragbaren elektronischen Geräts, insbesondere eines Mobilfunktelefons, auf dem eine Diktieranwendung zum Aufnehmen, Speichern, Wiedergeben und/oder Bearbeiten einer Spracheingabe mit Hilfe eines Anwendungsprogramms ausgeführt wird, wobei
- in einer von dem tragbaren elektronischen Gerät umfaßten Speichereinrichtung Speicherdaten für mehrere Betriebszustände der Diktieranwendung gespeichert sind,
- die mehreren Betriebszustände jeweils durch charakteristische Diktatparameter einer Spracheingabenaufzeichnung definiert sind,
- die Speicherdaten Informationen umfassen über ein im Fall des jeweiligen Betriebszustandes der Diktieranwendung auf einer Anzeigeeinrichtung des tragbaren elektronischen Geräts anzuzeigendes, für den jeweiligen Betriebszustand definiertes Menü von Funktionen der Diktieranwendung, die von einem Benutzer mit Hilfe einer Eingabeeinrichtung des tragbaren elektronischen Geräts ausgewählt werden können,
und wobei das Verfahren weiterhin die folgenden Schritte umfaßt:
- Ermitteln eines momentanen Betriebszustandes der Diktieranwendung, welcher durch momentane charakteristische Diktatparameter einer momentanen Spracheingabenaufzeichnung definiert ist, mit Hilfe einer von dem tragbaren elektronischen Gerät umfaßten Steuereinrichtung,
- Vergleichen des ermittelten momentanen Betriebszustands für die momentane Spracheingabenaufzeichnung mit den Speicherdaten für die mehreren Betriebszustände der Diktieranwendung,
- Auswählen eines dem ermittelten momentanen Betriebszustand entsprechenden Menüs von Funktionen der Diktieranwendung anhand des Vergleichs durch die Steuereinrichtung und
- Veranlassen einer Anzeige des ausgewählten Menüs von Funktionen der Diktierfunktionen auf der Anzeigeeinrichtung durch die Steuereinrichtung,
**dadurch gekennzeichnet, daß** beim Ermitteln des momentanen Betriebszustandes der Diktieranwendung als momentane charakteristische Diktatparameter eine momentane Gesamtlänge mL zwischen einem Anfang und einem Ende der momentanen Spracheingabeaufzeichnung und eine momentane Arbeitsposition mP zwischen dem Anfang und dem Ende der momentanen Spracheingabeaufzeichnung ermittelt werden.

2. Verfahren nach Anspruch 1, **dadurch gekennzeichnet, daß** als weiterer charakteristischer Diktatparameter der momentanen Spracheingabeaufzeichnung ein dynamischer Arbeitszustand verwendet wird, welcher einen Wiedergabe-, einen Aufnahme- und/oder einen Spulstatus der momentanen Spracheingabeaufzeichnung anzeigt.

3. Verfahren nach einem der vorangehenden Ansprüche, **dadurch gekennzeichnet, daß** das ausgewählte Menü auf der Anzeigeeinrichtung zur Anzeige gebracht wird, indem das ausgewählte Menü gegenüber weiteren Funktionen der Diktieranwendung aus einem Gesamtmenü optisch hervorgehoben wird.

4. Verfahren nach einem der vorangehenden Ansprüche, **dadurch gekennzeichnet, daß** ein erster momentaner Betriebszustand ermittelt wird und ein erstes Menü auf der Anzeigeeinrichtung angezeigt wird, welches die folgende Funktion der Diktieranwendung umfaßt: "Aufnahme".

5. Verfahren nach Anspruch 4, **dadurch gekennzeichnet, daß** beim Ermitteln des ersten momentanen Betriebszustands ermittelt wird: mL=0 und mP=0.

6. Verfahren nach einem der vorangehenden Ansprüche, **dadurch gekennzeichnet, daß** ein zweiter momentaner Betriebszustand ermittelt wird und ein zweites Menü auf der Anzeigeeinrichtung angezeigt wird, welches die folgenden Funktionen der Diktieranwendung umfaßt: "Einfügen", "Aufnahme", "Stop", "Wiedergeben" und "Vorwärtsspulen".

7. Verfahren nach Anspruch 6, **dadurch gekennzeichnet, daß** beim Ermitteln des zweiten momentanen Betriebszustands ermittelt wird: mL>0 und mP=0.

8. Verfahren nach einem der vorangehenden Ansprüche, **dadurch gekennzeichnet, daß** ein dritter momentaner Betriebszustand ermittelt wird und ein drittes Menü auf der Anzeigeeinrichtung angezeigt wird, welches die folgenden Funktionen der Diktieranwendung umfaßt: "Aufnahme", "Stop", "Rückwärtsspulen/Wiedergeben/Aufnehmen" und "Rückwärtsspulen".

9. Verfahren nach Anspruch 8, **dadurch gekennzeichnet, daß** beim Ermitteln des dritten momentanen Betriebszustands ermittelt wird: mL>0 und mP≈mL.

10. Verfahren nach einem der vorangehenden Ansprüche, **dadurch gekennzeichnet, daß** ein vierter momentaner Betriebszustand ermittelt wird und ein viertes Menü auf der Anzeigeeinrichtung angezeigt wird, welches die folgenden Funktionen der Diktieranwendung umfaßt: "Einfügen", "Aufnahme", "Stop", "Wiedergeben", Rückwärtsspulen" und "Vorwärtsspulen".

11. Verfahren nach nach Anspruch 10, **dadurch gekennzeichnet, daß** beim Ermitteln des vierten momentanen Betriebszustands ermittelt wird: mL>0 und 0<mP<mL.

12. Tragbares elektronisches Gerät, insbesondere Mobilfunktelefon, auf dem eine Diktieranwendung zum Aufnehmen, Speichern, Wiedergeben und/oder Bearbeiten einer Spracheingabe mit Hilfe eines Anwendungsprogramms ausführbar implementiert ist, wobei in dem tragbaren elektronischen Gerät
- in einer Speichereinrichtung Speicherdaten für mehrere Betriebszustände der Diktieranwendung gespeichert sind,
- die mehreren Betriebszustände jeweils durch charakteristische Diktatparameter einer Spracheingabenaufzeichnung definiert sind,
- die Speicherdaten Informationen umfassen über ein im Fall des jeweiligen Betriebszustandes der Diktieranwendung auf einer Anzeigeneinrichtung anzuzeigendes, für den jeweiligen Betriebszustand definiertes Menü von Funktionen der Diktieranwendung,
- eine Eingabeeinrichtung vorgesehen ist, um Benutzereingaben zum Auswählen der Diktierfunktionen zu erfassen, und
- eine Steuereinrichtung vorgesehen ist, die Steuereinrichtung aufweisend:
- Arbeitsmittel zum Ermitteln eines momentanen Betriebszustandes der Diktieranwendung, welcher durch momentane charakteristische Diktatparameter einer momentanen Spracheingabenaufzeichnung definiert ist,
- Vergleichsmittel zum Vergleichen des ermittelten momentanen Betriebszustands für die momentane Spracheingabenaufzeichnung mit den Speicherdaten für die mehreren Betriebszustände der Diktieranwendung,
- Auswahlmittel zum Auswählen eines dem ermittelten momentanen Betriebszustand entsprechenden Menüs von Funktionen der Diktieranwendung anhand des Vergleichs und
- Steuermittel zum Veranlassen einer Anzeige des ausgewählten Menüs von Diktierfunktionen auf der Anzeigeeinrichtung,
**dadurch gekennzeichnet, daß** die Arbeitsmittel konfiguriert sind, um beim Ermitteln des momentanen Betriebszustandes der Diktieranwendung als momentane charakteristische Diktatparameter eine momentane Gesamtlänge mL zwischen einem Anfang und einem Ende der momentanen Spracheingabeaufzeichnung und eine momentane Arbeitsposition mP zwischen dem Anfang und dem Ende der momentanen Spracheingabeaufzeichnung zu ermitteln.

13. Tragbares elektronisches Gerät nach Anspruch 12, **dadurch gekennzeichnet, daß** die Arbeitsmittel konfiguriert sind, um beim Ermitteln des momentanen Betriebszustandes der Diktieranwendung als weiteren charakteristischen Diktatparameter der momentanen Spracheingabeaufzeichnung einen dynamischen Arbeitszustand zu ermitteln, welcher einen Wiedergabe-, einen Aufnahme- und/oder einen Spulstatus der momentanen Spracheingabeaufzeichnung anzeigt.

14. Tragbares elektronisches Gerät nach Anspruch 12 oder 13, **dadurch gekennzeichnet, daß** die Steuereinrichtung konfiguriert ist, um mit Hilfe der Steuermittel ein erstes Menü auf der Anzeigeeinrichtung zur Anzeige zu bringen, welches die Funktion "Auf nahme" umfaßt, wenn ein erster momentaner Betriebszustand ermittelt wird, für den gilt: mL=0 und mP=0.

15. Tragbares elektronisches Gerät nach einem der Ansprüche 12 bis 14, **dadurch gekennzeichnet, daß** die Steuereinrichtung konfiguriert ist, um mit Hilfe der Steuermittel ein zweites Menü auf der Anzeigeeinrichtung zur Anzeige zu bringen" welches die Funktionen "Einfügen", "Aufnahme", "Stop", "Wiedergeben" und "Vorwärtsspulen" umfaßt, wenn ein zweiter momentaner Betriebszustand ermittelt wird, für den gilt: mL>0 und mP=0.

16. Tragbares elektronisches Gerät nach einem der Ansprüche 12 bis 15, **dadurch gekennzeichnet, daß** die Steuereinrichtung konfiguriert ist, um mit Hilfe der Steuermittel ein drittes Menü auf der Anzeigeeinrichtung zur Anzeige zu bringen, welches die Funktionen "Aufnahme", "Stop", "Rückwärtsspulen/Wiedergeben/Aufnehmen" und "Rückwärtsspulen" umfaßt, wenn ein dritter momentaner Betriebszustand ermittelt wird, für den gilt: mL>0 und mP≈mL.

17. Tragbares elektronisches Gerät nach einem der Ansprüche 12 bis 16, **dadurch gekennzeichnet, daß** die Steuereinrichtung konfiguriert ist, um mit Hilfe der Steuermittel ein viertes Menü auf der Anzeigeeinrichtung zur Anzeige zu bringen, welches die Funktionen "Einfügen", "Aufnahme", "Stop", "Wiedergeben", Rückwärtsspulen" und "Vorwärtsspulen" umfaßt, wenn ein vierter momentaner Betriebszustand ermittelt wird, für den gilt: mL>0 und 0<mP<mL.

18. Computerprogramm-Produkt umfassend ein computerlesbares elektronisches Speichermedium, welches Anweisungen zum Ausführen eines Verfahrens nach einem der Ansprüche 1 bis 11 aufweist.

## Claims

1. A method of operating a portable eletronic device, especially a mobile radio telephone apparatus on which a dictating application for recording, storing, reproducing, and/or processing speech input is executed by means of an application program, wherein
- memory data for a plurality of operating states of the dictating application are stored in a memory means included in the portable electronic device,
- the plurality of operating states each are defined by characteristic dictation parameters of a speech input record,
- the memory data comprise information about menus of functions of the dictating application defined for respective operating states and to be selected by a user by way of an input means of the portable electronic device, a menu defined for a respective operating state and to be displayed on a display means of the portable electronic device in case of the respective operating state, and
the method further comprising the following steps:
- determining a current operating state of the dictating application by way of a control means included in the portable electronic device, the operating state being defined by current characteristic dictation parameters of a current speech input record,
- comparing the current operating state determined for the current speech input record with the memory data for the plurality of operating states of the dictating application,
- selecting a menu of functions of the dictating application corresponding to the current operating state determined, on the basis on the comparison by the control means,
- causing the selected menu of functions of the dictating application to be displayed on the display means by the control means,
**characterized by** the step of determining a current overall length mL between a beginning and an end of the speech input record, and a current working position mP between the beginning and the end of the current speech input record, when determining the current operating state of the dictating application.

2. The method as claimed in claim 1, **characterized in that** another characteristic dictation parameter of the current speech input record used is a dynamic working state which indicates a state of playing, recording, and/or winding of the current speech input record.

3. The method as claimed in one of the preceding claims,
**characterized in that** the selected menu is displayed on the display means by optical highlighting of the menu selected from an overall menu as compared to other functions of the dictating application.

4. The method as claimed in one of the preceding claims,
**characterized in that** a first current operating state is determined and a first menu is displayed on the display means, comprising the following function of the dictating application: "record".

5. The method as claimed in claim 4, **characterized in that** when determining the first current operating state:
mL = 0 and mP = 0 are determined.

6. The method as claimed in one of the preceding claims,
**characterized in that** a second current operating state is determined and a second menu is displayed on the display means, comprising the following functions of the dictating application: "insert", "record", "stop", "play", and "forward wind".

7. The method as claimed in claim 6, **characterized in that** when determining the second current operating state:
mL > 0 and mP = 0 are determined.

8. The method as claimed in one of the preceding claims,
**characterized in that** a third current operating state is determined and a third menu is displayed on the display means, comprising the following functions of the dictating application: "record", "stop", "reverse wind/play/record" and "reverse wind".

9. The method as claimed in claim 8, **characterized in that** when determining the third current operating state:
mL > 0 and mP ≈ mL are determined.

10. The method as claimed in one of the preceding claims,
**characterized in that** a fourth current operating state is determined and a fourth menu is displayed on the display means, comprising the following functions of the dictating application: "insert", "record", "stop", "play", "reverse wind" and "forward wind".

11. The method as claimed in claim 10, **characterized in that** when determining the fourth current operating state:
mL > 0 and 0 < mP < mL are determined.

12. A portable electronic device, especially a mobile radio telephone apparatus on which a dictating application for recording, storing, reproducing, and/or processing speech input is implemented for execution by means of an application program, wherein in the portable electronic device
- memory data for a plurality of operating states of the dictating application are stored in a memory means,
- the plurality of operating states each are defined by characteristic dictation parameters of a speech input record,
- the memory data comprise information about menus of functions of the dictating application defined for respective operating states and to be displayed on a display means as the respective menu for the respective operating state,
- an input means is provided to detect user entries for selecting the functions of the dictating application, and
- a control means is provided, the control means comprising:
- working means for determining a current operating state of the dictating application, the operating state being defined by current characteristic dictation parameters of a current speech input record,
- comparing means for comparing the current operating state determined for the current speech input record with the memory data for the plurality of operating states of the dictating application,
- selecting means for selecting a menu of functions of the dictating application corresponding to the current operating state determined, on the basis of the comparison, and
- controlling means for causing the selected menu of functions of the dictating application to be displayed on the display means,
**characterized in that** the working means are configured to determine a current overall length mL between a beginning and an end of the speech input record, and a current working position mP between the beginning and the end of the current speech input record, when determining the current operating state of the dictating application.

13. The portable electronic device as claimed in claim 12,
**characterized in that** the working means are configured to determine a dynamic working state which indicates a state of playing, recording, and/or winding of the current speech input record, as another characteristic dictation parameter of the current speech input record, when determining the current operating state of the dictating application.

14. The portable electronic device as claimed in claim 12 or 13,
**characterized in that** the control means is configured to cause a first menu comprising the function "record" to be displayed on the display means, with the assistance of the controlling means, when a first current operating state is determined with which mL = 0 and mP = 0.

15. The portable electronic device as claimed in one of the claims 12 to 14, **characterized in that** the control means is configured to cause a second menu comprising the functions "insert", "record", "stop", "play", and "forward wind" to be displayed on the display means, with the assistance of the controlling means, when a second current operating state is determined with which mL > 0 and mP = 0.

16. The portable electronic device as claimed in one of the claims 12 to 15, **characterized in that** the control means is configured to cause a third menu comprising the functions "record", "stop", "reverse wind/play/record" and "reverse wind" to be displayed on the display means, with the assistance of the controlling means, when a third current operating state is determined with which mL > 0 and mP ≈ mL.

17. The portable electronic device as claimed in one of the claims 12 to 16, **characterized in that** the control means is configured to cause a fourth menu comprising the functions "insert", "record", "stop", "play", "reverse wind" and "forward wind" to be displayed on the display means, with the assistance of the controlling means, when a fourth current operating state is determined with which mL > 0 and 0 < mP < mL.

18. A computer program product comprising a computer readable electronic memory medium which comprises commands for carrying out a method according to one of the claims 1 to 11.

## Revendications

1. Procédé d'exploitation d'un appareil électronique portable, notamment d'un radiotéléphone mobile, sur lequel est réalisée une application de dictée pour l'enregistrement, la mémorisation, la reproduction et/ou le traitement d'une entrée vocale à l'aide d'un programme d'application,
- dans un dispositif de mémoire compris dans l'appareil électronique portable, des données de mémoire étant mémorisées pour plusieurs états de service de l'application de dictée,
- les plusieurs états de service étant respectivement définis par des paramètres caractéristiques de dictée d'un enregistrement d'entrées vocales,
- les données de mémoire comprenant des informations au sujet d'un menu défini pour l'état de service respectif et devant s'afficher sur un dispositif d'affichage de l'appareil électronique portable dans le cas de l'état de service respectif de l'application de dictée, de fonctions de l'application de dictée, qui peuvent être sélectionnées par un utilisateur à l'aide d'un dispositif de saisie de l'appareil électronique portable,
et le procédé comportant par ailleurs les étapes suivantes :
- détermination d'un état de service momentané de l'application de dictée, qui est défini par des paramètres momentanés caractéristiques de dictée d'un enregistrement momentané d'entrées vocales, à l'aide d'un dispositif de commande compris dans l'appareil électronique portable,
- comparaison de l'état de service momentané déterminé pour l'enregistrement momentané d'entrées vocales avec les données de mémoire pour les plusieurs états de service de l'application de dictée,
- sélection d'un menu correspondant à l'état de service momentané déterminé de fonctions de l'application de dictée à l'aide de la comparaison par le dispositif de commande et
- initiation d'un affichage du menu sélectionné de fonctions de l'application de dictée sur le dispositif d'affichage par le dispositif de commande
**caractérisé en ce que** lors de la détermination de l'état de service momentané de l'application de dictée, on détermine en tant que paramètres momentanés caractéristiques de dictée une longueur totale momentanée mL entre un début et une fin de l'enregistrement momentané d'entrées vocales et une position de travail momentanée mP entre le début et la fin de l'enregistrement momentané d'entrées vocales.

2. Procédé selon la revendication 1, **caractérisé en ce qu'**en tant que paramètre de dictée caractéristique supplémentaire de l'enregistrement momentané d'entrées vocales, on utilise un état de service dynamique, qui affiche une reproduction, un enregistrement et/ou un état de dévidage de l'enregistrement momentané d'entrées vocales.

3. Procédé selon l'une quelconque des revendications précédentes, **caractérisé en ce que** le menu sélectionné est amené à s'afficher sur le dispositif d'affichage, **en ce que** le menu sélectionné est optiquement mis en surbrillance par rapport à d'autres fonctions de l'application de dictée, dans un menu d'ensemble.

4. Procédé selon l'une quelconque des revendications précédentes, **caractérisé en ce qu'**on détermine un premier état de service momentané et on affiche un premier menu sur le dispositif d'affichage, qui comprend la fonction suivante de l'application de dictée : "enregistrement".

5. Procédé selon la revendication 4, **caractérisé en ce que** lors de la détermination de premier état de service momentané, on détermine : mL =0 et mP=0.

6. Procédé selon l'une quelconque des revendications précédentes, **caractérisé en ce qu'**on détermine un deuxième état de service momentané et on affiche un deuxième menu sur le dispositif d'affichage, qui comprend les fonctions suivantes de l'application de dictée : "insertion", "enregistrement", "reproduction" et "rembobinage avant".

7. Procédé selon la revendication 6, **caractérisé en ce que** lors de la détermination du deuxième état de service momentané, on détermine: mL>0 et mP=0.

8. Procédé selon l'une quelconque des revendications précédentes, **caractérisé en ce qu'**on détermine un troisième état de service momentané et on affiche un troisième menu sur le dispositif d'affichage, qui comprend les fonctions suivantes de l'application de dictée : "enregistrement", "stop", "rembobinage arrière"/reproduction/enregistrement" et "rembobinage avant".

9. Procédé selon la revendication 8, **caractérisé en ce que** lors de la détermination du troisième état de service momentané, on détermine: mL>0 et mP≈mL.

10. Procédé selon l'une quelconque des revendications précédentes, **caractérisé en ce qu'**on détermine un quatrième état de service momentané et on affiche un quatrième menu sur le dispositif d'affichage, qui comprend les fonctions suivantes de l'application de dictée : "insertion", "enregistrement", "stop", "reproduction", "rembobinage arrière" et "rembobinage avant".

11. Procédé selon la revendication 10, **caractérisé en ce que** lors de la détermination du quatrième état de service momentané, on détermine: mL>0 et 0<mP<mL.

12. Appareil électronique portable, notamment radiotéléphone mobile, sur lequel une application pour l'enregistrement, la mémorisation, la reproduction et/ou le traitement d'une entrée vocale est implémentée de façon exécutable à l'aide d'un programme d'application dans l'appareil électronique portable :
- des données de mémoire pour plusieurs états de service de l'application de dictée étant mémorisées dans un dispositif de mémoire,
- les plusieurs états de service étant définis respectivement par des paramètres caractéristiques de dictée d'un enregistrement d'entrées vocales,
- les données de mémoire comprenant des informations au sujet d'un menu défini de fonctions de l'application de dictée pour l'état de service respectif et devant s'afficher sur un dispositif d'affichage de l'appareil électronique portable dans le cas de l'état de service respectif de l'application de dictée,
- un dispositif de saisie étant prévu pour saisir des données utilisateurs pour sélectionner les fonctions de dictée et
- un dispositif de commande étant prévu, ce dispositif de commande comportant:
- des moyens de travail pour la détermination d'un état de service momentané de l'application de dictée, qui est défini par des paramètres momentanés caractéristiques de dictée d'un enregistrement momentané d'entrées vocales,
- des moyens de comparaison pour comparer l'état de service momentané déterminé pour l'enregistrement momentané d'entrée vocales avec les données de mémoire pour les plusieurs états de service de l'application de dictée,
- des moyens de sélection pour sélectionner un menu de fonctions de l'application de dictée correspondant à l'état de service momentané déterminé à l'aide de la comparaison et
- des moyens de commande pour l'initiation d'un affichage du menu sélectionné de fonctions de dictée sur le dispositif d'affichage
**caractérisé en ce que** lors de la détermination de l'état de service momentané de l'application de dictée, les moyens de travail sont configurés pour déterminer en tant que paramètres momentanés caractéristiques de dictée une longueur totale momentanée mL entre un début et une fin de l'enregistrement momentané d'entrées vocales et une position de travail momentanée mP entre le début et la fin de l'enregistrement momentané d'entrées vocales.

13. Appareil électronique portable selon la revendication 12, **caractérisé en ce que** lors de la détermination de l'état de service momentané de l'application de dictée, les moyens de travail sont configurés pour déterminer en tant que paramètres caractéristiques supplémentaires de dictée de l'enregistrement momentané d'entrées vocales un état de travail dynamique, qui affiche un état de reproduction, un état d'enregistrement et/ou un état de rembobinage.

14. Appareil électronique portable selon la revendication 12 ou 13, **caractérisé en ce que** le dispositif de commande est configuré pour amener à s'afficher sur le dispositif de commande à l'aide des moyens de commande un premier menu qui comprend la fonction "enregistrement", lorsqu'un premier état de service momentané est déterminé, pour lequel on applique mL=0 et mP=0.

15. Appareil électronique portable selon l'une quelconque des revendications 12 à 14, **caractérisé en ce que** le dispositif de commande est configuré pour amener à s'afficher sur le dispositif de commande à l'aide des moyens de commande un deuxième menu qui comprend les fonctions "insertion", "enregistrement", "stop", "reproduction" et "rembobinage avant", lorsqu'un deuxième état de service momentané est déterminé, pour lequel on applique mL>0 et mP=0.

16. Appareil électronique portable selon l'une quelconque des revendications 12 à 15, **caractérisé en ce que** le dispositif de commande est configuré pour amener à s'afficher sur le dispositif de commande à l'aide des moyens de commande un troisième menu qui comprend les fonctions "enregistrement", "stop", " "rembobinage arrière/reproduction/enregistrement" et "rembobinage arrière", lorsqu'un troisième état de service momentané est déterminé, pour lequel on applique : mL>0 et mP≈mL.

17. Appareil électronique portable selon l'une quelconque des revendications 12 à 16, **caractérisé en ce que** le dispositif de commande est configuré pour amener à s'afficher sur le dispositif de commande à l'aide des moyens de commande un quatrième menu qui comprend les fonctions "insertion", "enregistrement", "stop", "reproduction", "rembobinage arrière" et "rembobinage avant", lorsqu'un quatrième état de service momentané est déterminé, pour lequel on applique : mL>0 et 0<mP<mL.

18. Programme informatique comprenant un support de mémoire électronique lisible par ordinateur, qui comporte des instructions pour l'exécution d'un procédé selon l'une quelconque des revendications 1 à 11.
